Europäisches Patentamt

European Patent Office

Office européen des brevets

(11) Veröffentlichungsnummer: **0 275 472 B1**

(19)

# EUROPÄISCHE PATENTSCHRIFT

(12)

(45) Veröffentlichungstag der Patentschrift: **29.01.92**

(21) Anmeldenummer: **87118431.3**

(22) Anmeldetag: **12.12.87**

(51) Int. Cl.⁵: **B01D 8/00**, B01D 53/00

(54) Verfahren zum Entfernen von Verunreinigungen aus Abgasen.

(30) Priorität: **21.01.87 DE 3701544**

(43) Veröffentlichungstag der Anmeldung:
**27.07.88 Patentblatt 88/30**

(45) Bekanntmachung des Hinweises auf die
Patenterteilung:
**29.01.92 Patentblatt 92/05**

(84) Benannte Vertragsstaaten:
**AT BE CH FR GB IT LI NL SE**

(56) Entgegenhaltungen:
**FR-A- 1 302 973**
**FR-A- 2 572 304**
**GB-A- 1 321 153**
**US-A- 3 853 507**

(73) Patentinhaber: **MESSER GRIESHEIM GMBH**
**Hanauer Landstrasse 330**
**W-6000 Frankfurt/Main(DE)**

(72) Erfinder: **Spahn, Walter**
**Gelastrasse 102**
**W-6000 Frankfurt/M. 60(DE)**

## Beschreibung

Die Erfindung betrifft ein Verfahren zum Entfernen von Verunreinigungen aus Abgasen nach dem Oberbegriff des Anspruches.

Es ist bekannt, aus einem Gasgemisch eine Komponente abzutrennen, indem das Gasgemisch abgekühlt und die betreffende Komponente ausgefroren wird. Ein derartiges Verfahren zeigt beispielsweise die DE-A-34 22 417. In der industriellen Praxis wendet man dieses Verfahrensprinzip beispielsweise an, um Lösungsmitteldämpfe aus Abgasen auszufrieren und rückzugewinnen. Bei einer ausgeführten Anlage dieser Art dient als Kältequelle flüssiger Stickstoff, mit welchem ein Kreislaufgas auf die gewünschte niedrige Temperatur abgekühlt wird. Das Auskondensieren der Verunreinigungen erfolgt in zwei Gruppen von umschaltbaren Wärmeaustauschern, welche von dem Kreislaufgas beaufschlagt werden. Jede Gruppe besteht aus zwei Vorkühlern und einem Tiefkühler. Während in der einen Gruppe die Verunreinigungen auskondensiert werden, werden sie in der anderen Gruppe abgetaut.

Mit diesem bekannten Verfahren lassen sich Lösungsmitteldämpfe aus Abgasen wirksam entfernen. Schwierig und aufwendig ist jedoch die Regelung des Verfahrens.

Der Erfindung liegt die Aufgabe zugrunde, das bekannte Verfahren so zu verbessern, daß die Regelung äußerst einfach wird. Außerdem soll die eingesetzte Energie, insbesondere für das Kreislaufgebläse, rationeller verwertet werden.

Ausgehend von dem im Oberbegriff des Anspruches berücksichtigten Stand der Technik ist diese Aufgabe erfindungsgemäß gelöst mit den im kennzeichnenden Teil des Anspruches angegebenen Merkmalen.

Durch die erfindungsgemäße Maßnahme, das Verfahren mit nur noch einem Vorkühler in jeder Gruppe von Wärmeaustauschern zu betreiben, der jedoch mit zwei Innengasen, nämlich dem Kreislaufgas und dem Abgas, beaufschlagt wird, ergibt sich überraschenderweise eine unproblematische Regelung des Verfahrens. Es sind zwei einfache Regelstrecken erforderlich. Mit Ausnahme des Regelventils für den flüssigen Stickstoff werden nur Magnetventile mit den Stellungen Auf/Zu benötigt. Das erfindungsgemäße Verfahren läßt sich daher leicht programmgesteuert betreiben.

Ein Ausführungsbeispiel der Erfindung soll anhand der beigefügten Zeichnungen erläutert werden.

Die Zeichnungen zeigen ein vereinfachtes Schaltschema einer Anlage zur Durchführung des erfindungsgemäßen Verfahrens in verschiedenen Betriebszuständen.

Es zeigen:

Fig.1    einen Betriebszustand, bei dem in einer Gruppe von Wärmeaustauschern kondensiert und in der anderen abgetaut wird,

Fig.2    den folgenden Betriebszustand, bei dem in der einen Gruppe kondensiert und die andere Gruppe vorgekühlt wird,

Fig.3    den nachfolgenden Betriebszustand, bei dem in der einen Gruppe weiterhin kondensiert wird, in der anderen Gruppe dagegen das Rohgas abgekühlt wird.

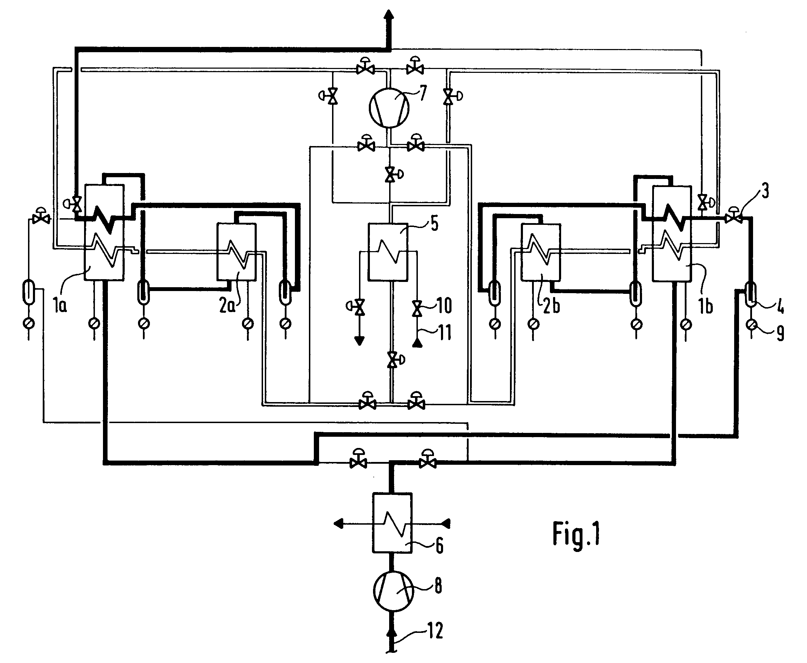

Die in den Fig. 1 bis 3 dargestellte Anlage zur Durchführung des erfindungsgemäßen Verfahrens besteht im wesentlichen aus zwei Gruppen von Wärmeaustauschern, nämlich einer ersten Gruppe gebildet aus dem Vorkühler 1a und dem Tiefkühler 2a, sowie einer zweiten Gruppe gebildet aus dem Vorkühler 1b und dem Tiefkühler 2b. Die erforderliche Kälte zum Auskondensieren der Verunreinigungen wird vom flüssigen Stickstoff aufgebracht, der durch die Leitung 11 in die Anlage eintritt und dessen Menge mittels des Stickstoffregelventils 10 dem jeweiligen Bedarf entsprechend eingestellt wird. Im Kreislaufkühler 5 wird durch den verdampfenden flüssigen Stickstoff ein Kreislaufgas abgekühlt.

Dieses Kreislaufgas ist ein Inertgas, beispielsweise Stickstoff. Die Druckverluste des Kreislaufgases werden durch das Kreislaufgebläse 7 ausgeglichen. Das zu behandelnde Gas tritt durch die Leitung 12 in die Anlage ein, wird mittels des Abgasgebläses 8 auf den erforderlichen Verfahrensdruck gebracht und im mit Kühlwasser beaufschlagten Abgaskühler 6 vorgekühlt. Der Einfachheit halber sind die weiteren Leitungsteile der Anlage nicht mit Positionsnummern versehen, dasselbe gilt für die Magnetventile 3, die Kondensatabscheider 4 und die Ablaßventile 9, die jeweils nur einmal beispielhaft mit Positionsnummern versehen worden sind.

Ein wesentlicher Vorteil des erfindungsgemäßen Verfahrens ist, daß mit Ausnahme des Stickstoffregelventils 10 alle übrigen Ventile Magnetventile 3 sind, die ausschließlich mit den Stellungen Auf/Zu betrieben werden. Somit kann das erfindungsgemäße Verfahren sehr leicht programmgesteuert betrieben werden.

In den Fig. 1 bis 3 sind die jeweils vom Abgas beaufschlagten Leitungen durch dicke schwarze Linien dargestellt, während die vom Kreislaufgas beaufschlagten Leitungen durch zwei dünne parallele Linien dargestellt sind.

Die beiden Gruppen von Wärmeaustauschern werden, wie an sich bekannt, umschaltbar betrieben. Während in der einen Gruppe die Verunreinigungen auskondensieren, werden sie in der anderen Gruppe abgetaut. Die einzelnen Phasen des erfindungsgemäßen Verfahrens werden nachfolgend beschrieben.

Bei der in Fig.1 dargestellten Arbeitsphase werden in der vom Vorkühler 1a und Tiefkühler 2a gebildeten Gruppe von Wärmeaustauschern die Verunreinigungen auskondensiert. In der vom Vorkühler 1b und dem Tiefkühler 2b gebildeten Gruppe von Wärmeaustauschern werden die auskondensierten Verunreinigungen abgetaut. Das durch die Leitung 12 und das Abgasgebläse 8 in die Anlage eintretende Abgas wird im Abgaskühler 6 auf etwa 20°C vorgekühlt. Es strömt dann als Außengas durch den Vorkühler 1b und den Tiefkühler 2b. Durch das warme Abgas werden in dieser Gruppe von Wärmeaustauschern die zuvor kondensierten Verunreinigungen abgetaut. Nach Verlassen des Tiefkühlers 2b strömt das Abgas als Innengas erneut durch den Vorkühler 1b und danach im bereits vorgekühlten Zustand in die andere Gruppe von Wärmeaustauschern. Diese wird gebildet aus dem Vorkühler 1a und dem Tiefkühler 2a. Das Abgas durchströmt zunächst beide Wärmeaustauscher als Außengas und zum Schluß den Vorkühler 1a noch einmal als Innengas. Hier gibt es seine tiefe Kälte an das als Außengas durch den Vorkühler 1a strömende Abgas ab. Während das Abgas als Außengas durch den Vorkühler 1a und den Tiefkühler 2a strömt, kühlt es sich so stark ab, daß die Verunreinigungen auskondensieren. Nach erneutem Durchströmen des Vorkühlers 1a als Innengas kann es daher in gereinigter Form in die Atmosphäre geblasen werden.

Das Kreislaufgas wird im Kreislaufgebläse entsprechend seiner Druckerhöhung um 20 bis 30°C erwärmt. Von dort strömt das Kreislaufgas als Innengas durch den Tiefkühler 2b und den Vorkühler 1b. Hierbei trägt es dazu bei, diese Gruppe von Wärmeaustauschern schnell aufzutauen. Die Verdichtungswärme des Kreislaufgebläses 7 wird somit optimal ausgenutzt. In bereits abgekühlter Form gelangt das Kreislaufgas dann in den Kreislaufkühler 5, wo es durch verdampfenden flüssigen Stickstoff auf die gewünschte tiefe Temperatur abgekühlt wird. Danach durchströmt das Kreislaufgas den Tiefkühler 2a und den Vorkühler 1a und gelangt zurück zum Kreislaufgebläse 7. Infolge der tiefen Temperatur des Kreislaufgases im Tiefkühler 2a und dem Vorkühler 1a kondensieren dort die Verunreinigungen aus dem Abgas.

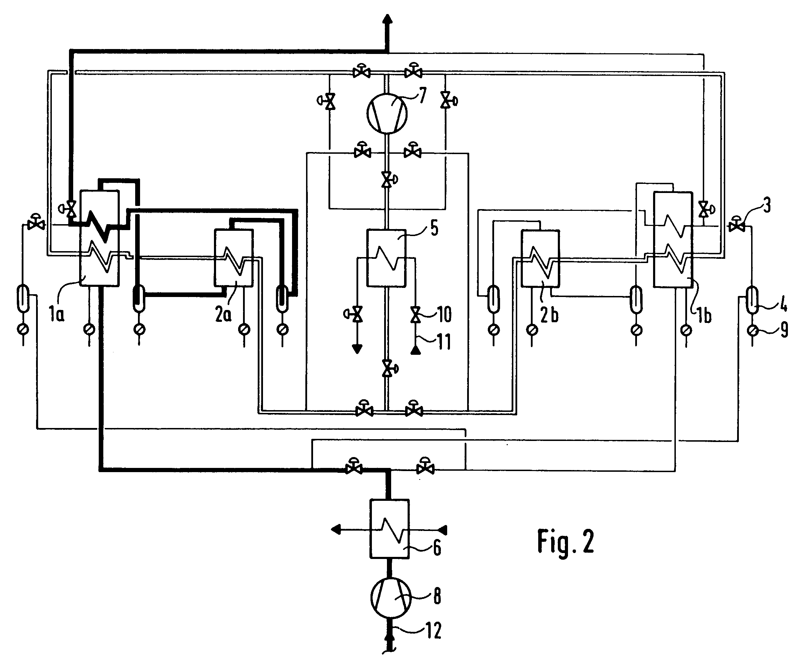

Fig.2 zeigt den anschließenden Betriebszustand, der beginnt, sobald der Vorkühler 1b und der Tiefkühler 2b vollständig abgetaut sind. Diese Gruppe von Wärmeaustauschern wird dann vom Abgas nicht mehr beaufschlagt, dieses strömt vielmehr direkt durch die aus dem Vorkühler 1a und dem Tiefkühler 2a gebildete Gruppe von Wärmeaustauschern in der gleichen Weise wie in Fig.1. In dieser Betriebsphase wird das gesamte Kreislaufgas aus dem Kreislaufgebläse 7 direkt im Kreislaufkühler 5 abgekühlt. Ein Teil des Kreislaufgases durchströmt dann ohne Gegenstrom den Tiefkühler 2b und den Vorkühler 1b, so daß diese Gruppe von Wärmeaustauschern vorgekühlt wird. Die andere Teilmenge des Kreislaufgases strömt wie in Fig.1 durch den Tiefkühler 2a und den Vorkühler 1a. Beide Teilmengen des Kreislaufgases gelangen zum Schluß wieder gemeinsam in das Kreislaufgebläse 7.

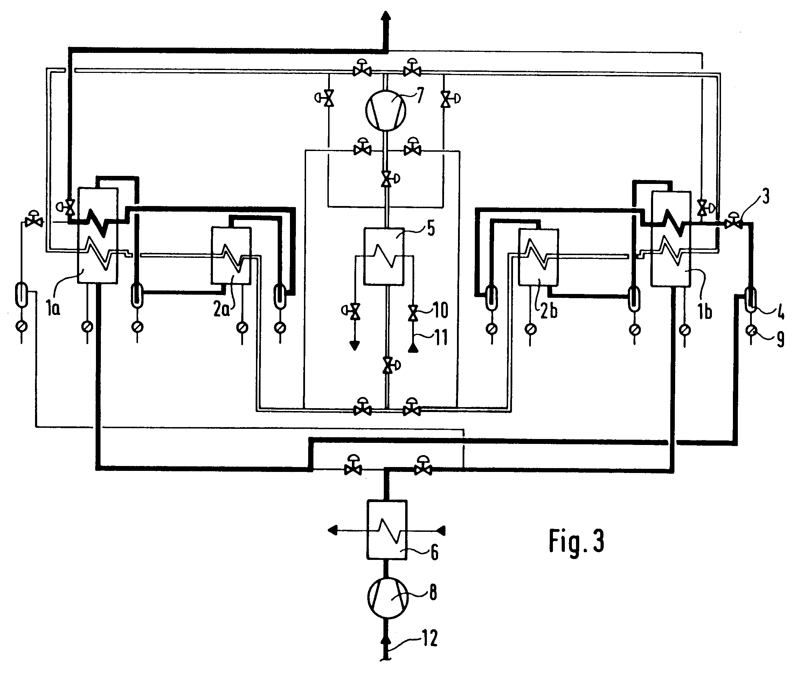

Fig.3 zeigt die daran anschließende Betriebsphase. Das Kreislaufgas wird genauso wie in Fig.2 durch die Anlage geführt. Sobald der Vorkühler 1b und der Tiefkühler 2b genügend vorgekühlt sind, wird das Abgas nunmehr wieder durch diese Gruppe von Wärmeaustauschern geführt, und zwar genauso wie in Fig.1. Hierbei kühlt es sich immer mehr ab, gelangt aber zunächst weiterhin wie in Fig.1 und 2 in die aus dem Vorkühler 1a und dem Tiefkühler 2a gebildete Gruppe von Wärmeaustauschern, wo die Verunreinigungen auskondensiert werden. Erst wenn der Vorkühler 1b und der Tiefkühler 2b durch das Kreislaufgas so weit abgekühlt sind, daß in ihnen die Verunreinigungen aus dem Abgas auskondensieren, wird die gesamte Anlage umgeschaltet. Es ergibt sich dabei sinngemäß die gleiche Betriebsweise wie in Fig.1, jedoch mit dem Unterschied, daß die auskondensierten Verunreinigungen im Vorkühler 1a und Tiefkühler 2a aufgetaut werden, während das Auskondensieren der Verunreinigungen im Tiefkühler 2b und Vorkühler 1b erfolgt.

Für den Betrieb der Anlage sind nur zwei einfache Regelstrecken erforderlich. Eine Mengenregelung ist lediglich am Stickstoffregelventil 10 erforderlich. Alle Betriebsphasen können durch einfaches Öffnen oder Schließen der Magnetventile 3 eingestellt werden, wodurch die Anlage leicht programmgesteuert betrieben werden kann. Ein weiterer Vorteil des erfindungsgemäßen Verfahrens besteht darin, daß die Verdichtungswärme des Kreislaufgebläses 7 direkt mitverwertet werden kann. Der Einsatz von Fremdenergie zum Auftauen der auskondensierten Verunreinigungen ist daher nicht erforderlich.

**Patentansprüche**

1. Verfahren zum Entfernen von Verunreinigungen aus Abgasen durch Abkühlen des Abgases und dadurch erfolgende Auskondensation der Verunreinigungen in zwei Gruppen von umschaltbaren Wärmeaustauschern, wobei die Kältezufuhr durch ein im Kreislauf mit Kreislaufgebläse geführtes gasförmiges Kühlmittel erfolgt, und die auskondensierte Verunreinigungen nach jeder Umschaltung der Wärmeaustauschergruppen unter Ausnutzung des Wärmeinhalts des Rohgases abgetaut werden, dadurch gekennzeichnet, daß das Verfahren in Wärmeaustauschergruppen durchgeführt wird, die lediglich aus je einem Vorkühler (1a,1b) und einem Tiefkühler (2a,2b) bestehen und nach dem Umschalten der Betrieb in drei Phasen erfolgt, indem in der ersten Phase (Abtauphase) der betreffende Vorkühler (1b) und Tiefkühler (2b) nacheinander vom eintretenden Rohgas als Außengas durchströmt werden, wonach das Rohgas den Vorkühler (1b) als Innengas erneut durchströmt und der anderen Wärmeaustauschergruppe zur Auskondensation der Verunreinigungen zugeführt wird, während gleichzeitig der betreffende Tiefkühler (2b) und Vorkühler (1b) nacheinander vom aus dem Kreislaufgebläse kommenden warmen Kühlmittel als Innengas durchströmt werden, bevor das Kühlmittel abgekühlt und der zweiten Wärmeaustauschergruppe als Innengas zugeführt wird, wonach in einer zweiten Phase (Vorkühlphase) der betreffende Tiefkühler (2b) und Vorkühler (1b) lediglich von einem Teilstrom des abgekühlten Kühlmittels als Innengas durchströmt werden, während der andere Teilstrom des Kühlmittels und das Rohgas der anderen Wärmeaustauschergruppe unmittelbar zur Auskondensation der Verunreinigungen zugeführt wird, wonach in einer dritten Phase (Abkühlphase) die betreffende Wärmeaustauschergruppe vom Kühlmittel entsprechend der Verfahrensweise in der zweiten Phase und vom Rohgas entsprechend der Verfahrensweise in der ersten Phase beaufschlagt wird.

## Claims

1.  Process for removing impurities from exhaust gases by cooling the exhaust gas and resulting condensation of the impurities in two groups of switchable heat exchangers, in which the refrigeration is supplied by a gaseous coolant carried in a circuit with recycle fan and the condensed impurities are thawed after each switchover of the heat exchanger groups by utilizing the heat content of the raw gas, characterized in that the process is carried out in heat exchanger groups which consist only of one precooler (1a,1b) and one deep cooler (2a,2b) each and the operation takes place in three phases after switchover, in which in the first phase (thawing phase) the incoming raw gas flows in turn through the relevant precooler (1b) and deep cooler (2b) as outside gas, after which the raw gas flows through the precooler (1b) again as inside gas and is supplied to the other heat exchanger group for condensation of the impurities while at the same time the warm coolant coming from the recycle fan passes in turn through the relevant deep cooler (2b) and precooler (1b) as inside gas before the coolant is cooled and supplied to the second heat exchanger group as inside gas, after which in a second phase (precooling phase) only a partial stream of the cooled coolant flows through the relevant deep cooler (2b) and precooler (1b) as inside gas while the other partial stream of the coolant and the raw gas are supplied directly to the other heat exchanger group for condensation of the impurities, after which in a third phase (cooling phase) the coolant corresponding to the mode of operation in the second phase and the raw gas corresponding to the mode of operation in the first phase are admitted to the relevant heat exchanger group.

## Revendications

1.  Procédé pour éliminer des impuretés de gaz d'échappement par refroidissement de ce gaz d'échappement et ensuite condensation des impuretés dans deux groupes d'échangeurs thermiques susceptibles d'être commutés, tandis que l'apport de froid s'effectue grâce à un fluide de refroidissement gazeux mis en circulation par une soufflante de circulation, et que les impuretés condensées sont dégelées après chaque commutation des groupes d'échangeurs thermiques en utilisant la chaleur contenue dans le gaz brut, procédé caractérisé en ce qu'il est mis en oeuvre dans des groupes d'échangeurs thermiques qui sont simplement constitués par respectivement un préréfroidisseur (1a, 1b) et un refroidisseur à basse température (2a, 2b), et en ce que, après la commutation, le fonctionnement s'effectue en trois phases, en ce que dans la première phase (phase de dégel) le pré-refroidisseur (1b) et le refroidisseur à basse température (2b) concernés sont successivement parcourus par le gaz brut entrant en tant que gaz externe, après quoi le gaz brut parcourt à nouveau le pré-refroidisseur (1b) en tant que gaz interne et est amené à l'autre groupe d'échangeurs thermiques pour la condensation des impuretés, tandis que simultanément le refroidisseur à basse température (2b) et le prérefroidisseur (1b) concernés sont parcourus successivement par le fluide de refroidissement chaud en provenance de la soufflante de circulation en tant que gaz interne, avant que ce fluide de refroidissement ne soit refroidi et amené au second groupe d'échangeurs thermiques en tant que gaz interne, après quoi, dans une seconde phase (phase de prérefroidissement) le refroidisseur à basse température (2b) et le prérefroidisseur (1b) concernés sont seulement parcourus par un débit partiel du fluide de refroidissement, refroidi en tant que gaz interne, tandis que l'autre débit partiel du fluide de refroidissement et le gaz brut sont amenés directement à l'autre groupe d'échangeurs thermiques pour la condensation des impuretés, après quoi, dans une troisième phase (phase de refroidissement), le groupe d'échangeurs thermiques concerné est parcouru par le fluide de refroidissement de façon correspondante à la deuxième phase du procédé, tandis qu'il est parcouru par le gaz brut de façon correspondante à la première phase du procédé.

Fig.1

EP 0 275 472 B1

Fig. 2

Fig. 3

EP 0 275 472 B1